Europäisches Patentamt

**European Patent Office**

Office européen des brevets

(11) Veröffentlichungsnummer: **0 066 791
B1**

## EUROPÄISCHE PATENTSCHRIFT

(45) Veröffentlichungstag der Patentschrift:
19.03.86

(51) Int. Cl.⁴: **B 25 J 5/00**

(21) Anmeldenummer: 82104627.3

(22) Anmeldetag: 27.05.82

(54) Einrichtung zur Ausführung von Inspektionsarbeiten an einem Dampferzeuger für Kernreaktoren und ein Verfahren zum Einbringen der Einrichtung in eine Kammer eines Dampferzeugers.

(30) Priorität: 06.06.81 DE 3122660

(43) Veröffentlichungstag der Anmeldung:
15.12.82 Patentblatt 82/50

(45) Bekanntmachung des Hinweises auf die Patenterteilung:
19.03.86 Patentblatt 86/12

(84) Benannte Vertragsstaaten:
BE CH DE FR IT LI NL SE

(56) Entgegenhaltungen:
EP - A - 0 007 557
EP - A - 0 008 386
DE - A - 2 546 586
DE - A - 2 826 106
US - A - 4 216 893

(73) Patentinhaber: BROWN BOVERI REAKTOR GmbH,
Dudenstrasse 44, D-6800 Mannheim 1 (DE)

(72) Erfinder: Vermaat, Huibrecht Pieter, Waaldrift 12,
NL-3235 AV Rockanje (NL)

(74) Vertreter: Dahlmann, Gerhard, Dipl.-Ing. et al, c/o Brown Boveri & Cie., AG Zentralbereich ZPT/P Postfach 351, D-6800 Mannheim (DE)

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

LIBER, STOCKHOLM 1986

## Beschreibung

Die Erfindung betrifft eine Einrichtung zur Ausfuhrung von Inspektionsarbeiten an einem Dampferzeuger für Kernreaktoren, der wenigstens eine Kammer aufweist, in die ein in einem Rohrboden gefaßtes Rohrbündel mündet, mit einem durch eine Öffnung in die Kammer einbringbaren Manipulator, der aus einem zwischen einem Boden der Kammer und dem Rohrboden erstreckten teleskopsförmig ausgebildeten Standbein un einem vom Standbein auskragenden, parallel zum Rohrboden bewegbaren Arm besteht, wobei dem Arm ein relativ zu und/oder zusammen mit demselben bewegbarer Geräteträger zugeordnet ist.

Eine derartige Einrichtung ist aus der EP-A-007 557 bekannt. Sie dient zur Dekontamination der Innenwände der Dampferzeugerkammer. Dazu kragt von einem Standbein ein Tragarm aus, von dessen freiem Ende eine Führungsbahn zum unteren Endbereich des Standbeines verläuft. Entlang der einen Viertelkreis darstellenden Führungsbahn ist ein Arm bewegbar, der einen Schlitten trägt. Auf dem Schlitten ist eine Düse befestigt, durch die das über einen Schlauch herangeführte Dekontaminationsmedium gegen die Innenwände gesprüht wird. Zur Inspektion oder zur Reparatur der in der Rohrplatte endenden Rohre ist diese Einrichtung jedoch nicht geeignet, da der Tragarm für die Führungsschiene einem auf dem Schlitten montierten Werkzeug im Wege stehen würde. Weiterhin sind mit dem Schlitten zahlreiche, in den Randbereichen der Rohrplatte befindliche, Rohre nicht erreichbar.

In bestimmten Zeitabständen müssen die zahlreichen Rohre, die innerhalb eines Dampferzeugers für Kernkraftwerke angeordnet sind, überprüft werden. Dazu werden von einer Dampferzeugerkammer aus, in die über eine Rohrplatte die Enden des Rohrbündels münden, z. B. Wirbelstromsonden in die Rohre eingeführt, um Aufschluß über Beschädigungen zu erlangen. Beschädigte Rohre können dann ebenfalls von der Dampferzeugerkammer aus repariert bzw. mit Stopfen verschlossen werden. Zum Tragen der Sonden oder Werkzeuge bzw. zum Positionieren derselben sind Manipulatoren erforderlich, die innerhalb der Dampferzeugerkammer angeordnet sind. Da die Dampferzeugerkammer bei in Kernkraftwerken eingesetzten Dampferzeugern eine Zone gefährlicher Radioaktivität ist, soll der Manipulator so ausgebildet werden, daß zu dessen Einoder Ausbringen in die Dampferzeugerkammer kein Personal in diese gefährliche Zone einsteigen muß.

Dazu ist aus der DE-A-28 26 106 ein Manipulator bekannt, der von Spreizdornen, die in die Rohrenden ragen, gehalten ist. Soll ein Bewegungsschritt erfolgen, wird ein Teil der Spreizdorne ausgefahren, ein Arm des Manipulators einen Schritt weiterbewegt und die Spreizdorne wieder eingefahren. Die Steuerung der Bewegungsabläufe und der Spannvorgänge ist aufwendig. Bei Versagen der Spreizdorne stürzt der Manipulator ab, da er allein von diesen gehalten wird. Der Manipulator wird von einer Transporteinheit in die Dampferzeugerkammer gebracht, die ausschließlich für diesen Zweck Verwendung findet. Sie kann nur im Bereich der Dampferzeugeröffnung abgestützt werden und verbleibt auch während des Prüfvorganges in der Dampferzeugerkammer.

Es ist die Aufgabe der Erfindung einen einfacher aufgebauten Manipulator anzugeben, der nur einen Festpunkt am Rohrboden benötigt und von dort aus den restlichen Bereich des Rohrbodens abführt. Dabei soll ein Betreten der Dampferzeugerkammer durch Betriebspersonal vermieden werden.

Gelöst wird diese Aufgabe erfindungsgemäß dadurch, daß die Einrichtung aus zwei verschiedenen Teilen, nämlich einerseits aus dem Arm und seinem zugeordneten Geräteträger und andererseits aus dem Standbein besteht, daß der Geräteträger über ein Antriebselement relativ zum Arm drehbar ist, daß nach erfolgter Einführung in die Kammer das Standbein und der Arm durch eine Steckverbindung miteinander verbunden sind, wobei diese Steckverbindung aus einem Kupplungsstück des Armes und einem Kupplungsstück des Standbeines besteht, daß zur Vertikal und Drehbewegung des Armes dem Standbein ein kombinierter Hub- und Drehantrieb zugeordnet ist und daß das Standbein und der Arm je ein Drehgelenk zur lösbaren Aufnahme einer Montagestange aufweist, das an der zu seinem Fuß gegenüberliegenden Seite des Standbeines bzw. an der das Kupplungsstück nicht tragenden Seite des Armes angeordnet ist.

Der Manipulator wird von einer Bedienungsperson, die sich außerhalb der Dampferzeugerkammer aufhält, mit Hilfe der Montagestange von Hand eingebracht und ßber das Standbein befestigt. Die Montagestange wird ausgeklinkt, so daß sich nur noch der Manipulator in der Dampferzeugerkammer befindet. Ein mehrmaliges Versetzen der Manipulatorbefestigung ist nicht erforderlich.

Die Kupplungsverbindung zwischen dem Standbein und dem Arm ist vorzugsweise in dem kombinierten Hub- und Drehantrieb integriert, der zur Vertikal- und Drehbewegung des Armes relativ zum Standbein dient.

Ein Verfahren zum Einbringen der erfindungsgemäßen Einrichtung in die Kammer eines Dampferzeugers ist dadurch gekennzeichnet, daß

a) Die Montagestange mit dem Drehgelenk des Standbeines verbunden wird,

b) das Standbein durch die Öffnung in die Kammer eingebracht und mit seinem Kopfende im Rohrboden arretiert wird,

c) das teleskopförmig ausgebildete Standbein ausgefahren, am Boden der Kammer abgestützt und die Montagestange vom Standbein gelöst wird,

d) eine von der Öffnung zum Standbein verlaufende Führungsschiene eingebracht wird

und

e) die Montagestange mit dem Drehgelenk des Arms lösbar verbunden, der Arm über die Führungsschiene bis an das Standbein herangeschoben und die Kupplungsverbindung mit dem Standbein hergestellt wird.

Diese Maßnahmen bringen eine Erleichterung des Montagevorganges, da zuerst das Standbein eingebracht wird und dann der Arm mit dem ihm zugeordneten Geräteträger. Führungsschiene und Montagestange sind Montagehilfen, die währen dem Prüfvorgang nicht in der Dampferzeugerkammer angeordnet bleiben.

Zur eindeutigen Bestimmung der Position der Einrichtung sind den Antriebselementen zur Bewegung der Manipulatorteile Stellungsanzeiger zugeordnet, die mit Aufzeichnungsgeräten für die Bewegungsabläufe verbunden sind.

Anhand der Figuren 1 bis 4 und von zwei Ausführungsbeispielen wird die erfindungsgemäße Einrichtung und ein Verfahren zum Ein- und Ausbau einer Einrichtung beschrieben. Dabei zeigen die

Fig. 1 einen Manipulator in Arbeitsstellung und

Fig. 2 - 4 verschiedene Montageschritte zum Ein- bzw. Ausbringen des Manipulators nach Fig. 1 in eine Dampferzeugerkammer.

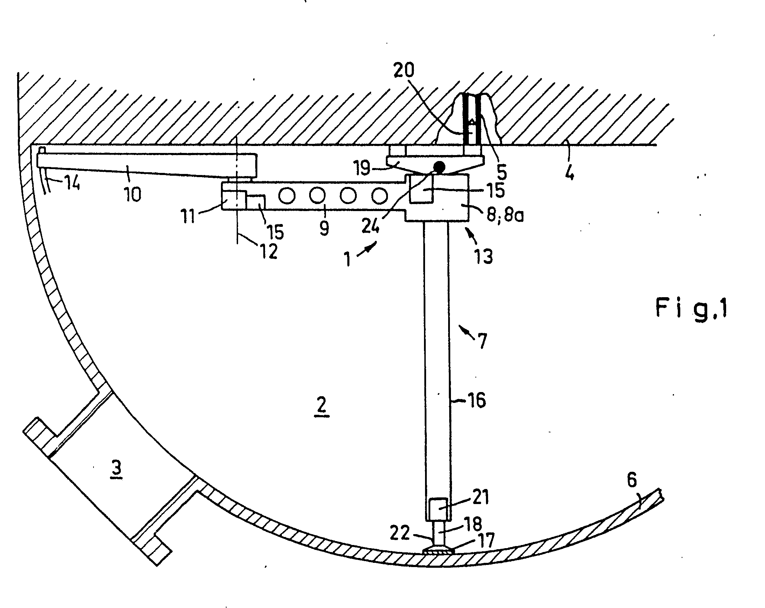

Die Fig. 1 zeigt einen Manipulator 1 während seines Einsatzes in einer Dampferzeugerkammer 2, die mit einer als Mannloch bezeichneten Öffnung 3 versehen ist. Ein Rohrboden 4, in den eine große Anzahl Rohre 5 münden, und ein halbkugelförmig ausgebildeter Boden 6 begrenzen die Kammer 2. Je nach Dampferzeugertyp schließt der halbkugelförmige Boden 4 eine einzige Kammer (Geradrohrdampferzeuger) oder, durch eine nichtdargestellte Zwischenwand getrennt, zwei Kammern (U-Rohrdampferzeuger) ein. Der Manipulator nach Fig. 1 ist zweiteilig ausgebildet und erleichtert somit das Ein- und Ausbringen in die Kammer 2. Er besteht aus einem Standbein 7 und aus einem über eine Kupplung 8, 8a mit demselben verbundenen Arm 9. Am freien Ende des Arms ist ein Geräteträger 10 angelenkt, der über ein Antriebselement 11 um die Achse 12 parallel zum Rohrboden bewegbar ist. Ein kombinierter Hub- und Drehantrieb 13, hydraulischer und/oder mechanischer Bauart, in den der Kupplungsteil 8a integriert ist, erlaubt eine Brehbewegung des Armes 9 relativ zum Standbein 7 und/oder kombiniert mit einer relativ zum Arm erfolgten Drehbewegung des Geräteträgers 10. Der kombinierte Hub- und Drehantrieb dient weiterhin zur vertikalen Bewegung des Armes entlang des Standbeines 7 zum Zwecke des später noch zu erläuternden Ein- und Ausbauvorganges des Manipulators. Am freien Ende des Geräteträgers sind nicht näher dargestellte Führungselemente 14 angeordnet, die zum Heranführen der Reparatur- oder Prüfwerkzeuge an die zu überprüfenden Rohre des Dampferzeugerrohrbündels dienen. In der Regel sind die Führungselemente flexible Schläuche, die durch das Mannloch ragen und von außerhalb der Kammer herangeführt werden. Durch die relative Drehbewegung von Arm und Geräteträger zueinander bzw. der relativen Drehbewegung des Armes zum Standbein läßt sich von einer einzigen Stellung des Standbeines aus nahezu der gesamte Bereich des Rohrbodens bestreichen. In der Praxis bedeutet das, daß bei einem Rohrboden mit 4000 Rohren nur ca. 10 Rohre aufgrund des Platzbedarfs für die Zentrierung des Standbeines nicht mit ein und derselben Standbeinstellung geprüft werden können. Stellungsanzeiger 15, die mit einer programmgestützten Bedienungseinheit verbunden sind, erlauben ein genaues Positionieren der Prüf- oder Reparaturgeräte an den einzelnen Rohren der Rohrplatte. Die Bedienungseinheit und andere Aufzeichnungsgeräte für die Bewegungsabläufe der Manipulatorteile sind außerhalb der Kammer angeordnet und nicht dargestellt. Sie erlauben sowohl einen automatischen Ablauf als auch eine Bedienung von Hand. Das Standbein besteht aus einem Rohr 16, In das teleskopförmig oder als Gewindespindel ausgebildet eine den Fuß 17 tragende Stange 18 ragt. Am oberen Ende des Hohres ist eine Platte 19 befestigt, die zwei Stifte 20 zur Zentrierung des Standbeines in zwei Rohren 5 des Rohrbodens 4 trägt. Mittels eines in dem Rohr 16 integrierten Hubantriebs 21 läßt sich der Fuß und das Rohr 16 relativ zueinander in Achsrichtung bewegen. Der Fuß paßt sich dabei durch ein Drehgelenk 22 zwischen Stange 18 und Fuß 17 dem gewölbten Boden an.

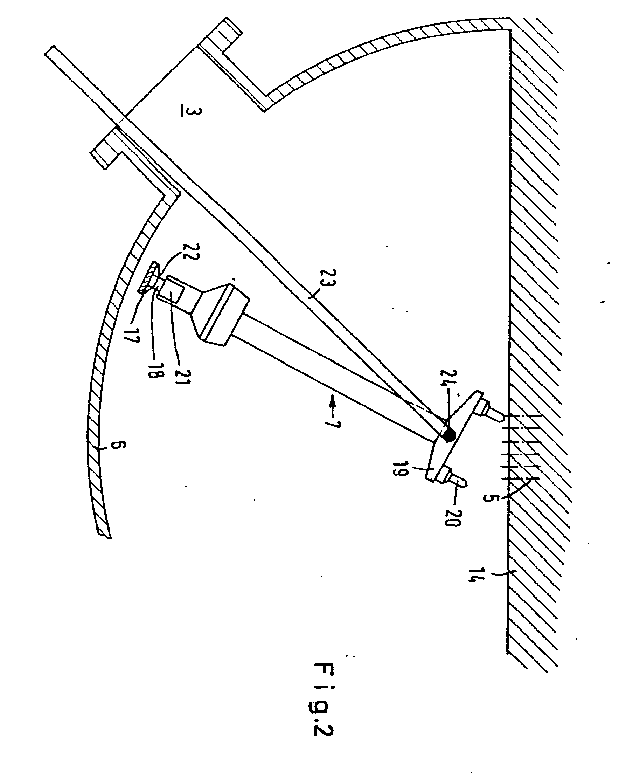

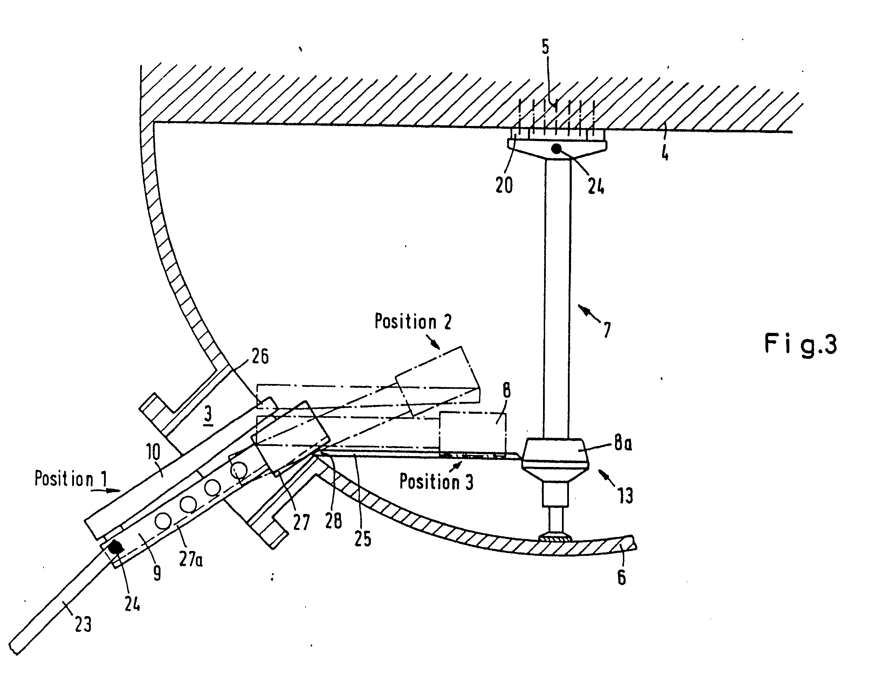

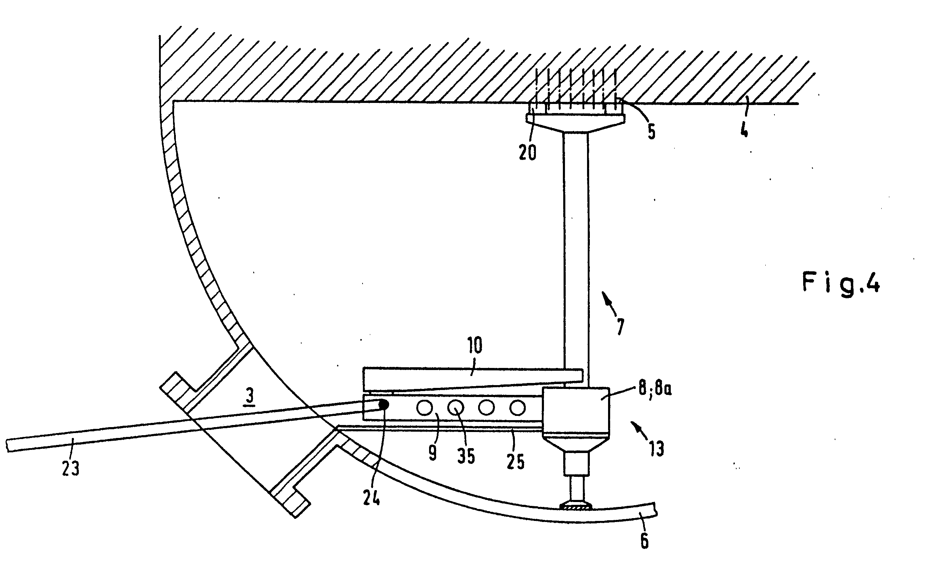

Die Figuren 2 - 4 zeigen den Einbauvorgang des Standbeines 7 und des den Geräteträger 10. aufweisenden Armes 9 in schrittweiser Folge. Gemäß Fig. 2 wird mit Hilfe einer Montagestange 23, die in ein an der Platte 19 des Standbeines angebrachtes Drehgelenk 24 einsteckbar ist, das Standbein von einer außerhalb der Kammer 2 befindlichen Person von Hand in die Kammer eingebracht. Das Standbein wird dabei so geführt, daß die Stifte 20 in zwei durch die Öffnung 3 gut sichtbare markierte Rohre 5 des Rohrbodens 4 eingebracht werden können. In der nun eingenommenen vertikalen Lage wird über den Hubantrieb 21 die Stange 18 mit dem Fuß 17 bis zur Anlage desselben am Boden 6 nach unten ausgefahren. Jetzt wird die Montagestange ausgeklinkt und der Einbau des Standbeins ist abgeschlossen. Alsdann wird gemäß Fig. 3 ebenfalls ohne Betreten der Kammer 2 eine Führungsschiene 25 mit dem Gehäuse des kombinierten Hub- und Drehantriebes 13 lösbar verbunden, die mit ihrem anderen Ende bis zum Rand 26 der Öffnung 3 reicht. An einem Drehgelenk 24 des Armes 9, das in gleicher Weise wie das an der Platte 19 ausgebildet ist, wird nach vorherigem Ansetzen des mit einer Nut 27, 27a analog der Führungsschiene versehenen Arms in der in Fig. 3 gezeichneten Lage eine Montagestange eingesetzt. Die Mut ist sowohl an der Unterseite des Kupplungsteiles 8 als auch entlang der Unterseite des restlichen Armes angebracht. Der Arm wird somit zuerst in der Nut des Kupplungsteils 8 geführt (Position 1) und geht dann nach weiterem Verschieben in die strichpunktiert dargestellte Position 2, wobei die Nut 27a im restlichen Teil des Armes die Führung zusammen mit dem freien Ende 28 der Führungsschiene 25 solange übernimmt bis gemäß der ebenfalls strichpunktiert angegebenen Position 3 die Nut 27 im Kupplungsteil 8 wieder die Führung übernimmt. Der Arm gelangt dann zusammen mit dem Geräteträger in die in der Fig. 4 dargestellte Verbindungsposition mit dem Standbein 7. Dabei ist der Kupplungsteil 8 des Armes mit dem im kombinierten Hub- und Drehantrieb 13 integrierten Kupplungsteil 8a eine Steckverbindung eingegangen, die einfach zustande kommt und auch wieder leicht zu lösen ist. Alsdann werden die Montagestange 23 und die Führungsschiene 25 entnommen, so daß sich innerhalb der Kammer 2 keine Montagehilfsmittel befinden, die den Betrieb des Manipulators stören könnten. Mit dem kombinierten Hub- und Drehantrieb 13 wird der Arm 9 zusammen mit seinem Geräteträger 10 vertikal bis zu seiner Meßposition nach oben gefahren. Der Prüf- oder Reparaturvorgang kann nun nach einem vorgesehenen Programm ablaufen, da das Standbein mit seinen Stiften 20 in markierten Rohrpositionen arretiert ist und das Programm der Bedienungsanlage diese Rohrpositionen als Bezugspunkt annimmt. Der Ausbau des Manipulators erfolgt sinn-gemäß in umgekehrter Reihenfolge.

Mit der Erfindung wurde ein aus zwei Feilen bestehender Manipulator geschaffen, der ein einfaches und schnelles Ein- und Ausbringen in die Kammer 2 ermöglicht. Das Ein- bzw. Ausbringen des Manipulators ist von außerhalb der Kammer aus von einer Person mit Hilfe der Montagemittel leicht durchzuführen. Dadurch reduziert sich die Strahlenbelastung des Beidenungspersonals erheblich, und ein Abstürzen des Manipulators ist durch die Verwendung des Standbeines ausgeschlossen.

## Patentansprüche

1. Einrichtung zur Ausführung von Inspektionsarbeiten an einem Dampferzeuger für Kernreaktoren, der wenigstens eine Kammer (2) aufweist, in die ein in einem Rohrboden (4) gefaßtes Rohrbündel mündet, mit einem durch eine Öffnung (3) in die Kammer einbringbaren Manipulator (1), der aus einem zwischen einem Boden (5) der Kammer (2) und dem Rohrboden (4) erstreckten teleskopförmig ausgebildeten Standbein (7) und einem vom Standbein auskragenden parallel zum Rohrboden (4) bewegbaren Arm (9) besteht, wobei dem Arm ein relativ zu und/oder zusammen mit demselben bewegbarer Geräteträger (10) zugeordnet ist, dadurch gekennzeichnet, daß die Einrichtung aus zwei verschiedenen Teilen, nämlich einerseits aus dem Arm (9) und seinem zugeordneten Geräteträger (10) und andererseits aus dem Standbein (7) besteht, daß der Geräteträger (10) über ein Antriebselement (11) relativ zum Arm (9) drehbar ist, daß nach erfolgter Einführung in die Kammer (2) das Standbein (7) und der Arm (9) durch eine Steckverbindung miteinander verbunden sind, wobei diese Steckverbindung aus einem Kupplungsstück (8) des Armes (9) und einem Kupplungsstück (8a) des Standbeines (7) besteht, daß zur Vertikal- und Drehbewegung des Armes dem Standbein ein kombinierter Hubund. Drehantrieb zugeordnet ist. und daß das Standbein und der Arm je ein Drehgelenk zur lösbaren Aufnahme einer Montagestange aufweist, das an der zu seinem Fuß (17) gegenüberliegenden Seite des Standbeines (7) bzw. an der das Kupplungsstück (8) nicht tragenden Seite des Armes (9) angeordnet ist.

2. Einrichtung nach Anspruch 1, dadurch gekennzeichnet, daß die Kupplungsverbindung zwischen dem Standbein (7) und dem Arm (9) in dem kombinierten Hubund Drehantrieb (13) integriert ist.

3. Verfahren zum Einbringen einer Einrichtung nach Anspruch 1 oder 2 in die Kammer eines Dampferzeugers, dadurch gekennzeichnet, daß
a) die Montagestange (23) mit dem Drehgelenk (24) des Standbeines (7) verbunden wird
b) das Standbein (7) durch die Öffnung (3) in die Kammer (2) eingebracht und mit seinem Kopfende im Rohrboden (4) arretiert wird,
c) das teleskopförmig ausgebildete Standbein (7) ausgefahren, am Boden der Kammer abgestützt und die Montagestange vom Standbeim gelöst wird,
d) eine von der Öffnung zum Standbein verlaufende Führungsschiene (25) eingebracht wird und
e) die Montagestange mit dem Drehgelenk (24) des Arms (9) lösbar verbunden, der Arm über die Führungsschiene bis an das Standbein herangeschoben und die Kupplungsverbindung mit dem Standbein hergestellt wird.

4. Einrichtung nach Anspruch 1, oder 2, dadurch gekennezeichnet, daß den Antriebselementen zur Bewegung der Manipulatorteile Stellungsanzeiger zugeordnet sind, die mit Aufzeichnungsgeräten für die Bewegungsabläufe verbunden sind.

## Claims

1. Arrangement for the performance of inspection operations on a steam generator for nuclear reactors, which exhibits at least one chamber (2), into which a set of tubes held in a tube plate (4) opens, with a manipulator (1) which can be introduced through an aperture (3) into the chamber, the manipulator consisting of a pillar (7) which extends between a floor (5) of the chamber (2) and the tube plate (4) and which is of telescopic construction and an arm (9) which projects from the pillar and which is movable parallel to the tube plate (4, there being associated with the arm an equipment carrier (10) which is movable relative to and/or together with the latter, characterised in that the arrangement consists of two different parts, namely on the one hand of the arm (9) and its associated equipment carrier (10) and on the other hand of the pillar (7), in that the equipment carrier (10) is rotatable by means of a drive element (11) relative to the arm (9), in that, when introduced into the chamber (2), the pillar (7) and the arm (9) are connected with one another by a plug connection, this plug connection consisting of a coupling piece (8) of the arm (9) and a coupling piece (8a) of the pillar (7), in that a combined lifting and rotary drive is associatedwith the pillar forthe vertical and rotary movement of the arm, and in that the pillar and the arm each exhibit a respective swivel joint for the releasable mounting of an assembly rod, the swivel joints being disposed at the end of the pillar (7) opposite to its foot (17) and at the end of the arm (9) not carrying the coupling piece (8) respectively.

2. Arrangement according to Claim 1, characterised in that the coupling connection is incorporated between the pillar (7) and the arm (9) in the combined lifting and rotary drive (13).

3. Method for the introduction of an arrangement according to Claim 1 or 2 into the chamber of a steam generator, characterised in that

a) the assembly rod (23) is connected with the swivel joint

b) the pillar (7) is introduced through the aperture (3) into the chamber (2) and is arrested by its head end in the tube plate (4),

c) the pillar (7) having a telescopic construction is extended and supported at the floor of the chamber, and the assembly rod is released from the pillar,

d) a guide rail (25) extending from the aperture to the pillar is introduced, and

e) the assembly rod is releasably connected with the swivel joint (24) of the arm (9), the arm is advanced via the guide rail as far as the pillar, and the coupling connection with the pillar is established.

4. Arrangement according to Claim 1, or 2, characterised in that with the drive elements for the movement of the manipulator parts there are associated position indicators, which are connected with recording devices for the movement procedures.

**Revendications**

1. Dispositif pour la réalisation de travaux d'inspection sur un générateur de vapeur de réacteurs nucléaires, lequel générateur presente au moins un compartiment (2) dans lequel débouche un faisceau de tubes rassemblés dans un plateau à tubes (4), avec un manipulateur (1) qui peut être introduit dans le compartiment par une ouverture (3) et qui est constitué d'un montant de support télescopique (7) s'étendant entre le fond (6) du compartiment (2) et le plateau à tubes (4) et d'un bras (9) partant en saillie du montant de support et déplaçable parall*élément au plateau à tubes (4), le bras étant muni d'un porte-appareils (10) déplaçable par rapport au bras et/ou conjointement avec le bras, caractérisé par le fait que le dispositif est constitué de deux parties distinctes, à savoir d'une part le bras (9) et son porte-appareils (10) et d'autre part le montant de support (7), que le porte-appareils (10) est mobile en rotation par rapport au bras (9) au moyen d'un élément d'entraînement (11), qu'à la suite de leur introduction dans le compartiment (2), le montant de support (7) et le bras (9) sont mutuellement assemblés par un assemblage embrochable qui est constitué d'un élément d'accouplement (8) du bras (9) et d'un élément d'accouplement (8a) du montant de support (7), qu'en vue des mouvements verticaux et de rotation du bras, le montant de support est muni d'un entraînement combiné de translation et de rotation, et que le montant de support et le bras présentent chacun une articulation tournante qui est destinée à recevoir de manière détachable une barre de montage et qui est respectivement disposée sur le côté du montant de support (7) qui est opposé à son pied (17) et sur le côté du bras (9) qui ne porte pas l'élément d'accouplement (8).

2. Dispositif selon la revendication 1, caractérisé par le fait que l'assemblage accouplant le montant de support (7) et le bras (9) est intégré à l'entraînement combiné de translation et de rotation (13).

3. Procédé pour l'introduction d'un dispositif selon la revendication 1 ou 2 dans le compartiment d'un générateur de vapeur, caractérisé par le fait que:

a) la barre de montage (23) est assemblée à l'articulation tournante (24) du montant de support (7),

b) le montant de support (7) est introduit par l'ouverture (3) dans le compartiment (2), et bloqué par son extrémité de tête dans le plateau à tubes (4),

c) le montant de support télescopique (7) est déployé, appuyé contre le fond du compartiment, et la barre de montage est désaccouplée du montant de support,

d) une coulisse (25) s'étendant de l'ouverture au montant de support est introduite, et

e) la barre de montage est assemblée de manière détachable à l'articulation tournante (24) du bras (9), le bras est poussé par l'intermédiaire de la coulisse jusqu'au montant de support, et l'assemblage d'accouplement avec le montant de support est réalise.

4. Dispositif selon la revendication 1 ou 2, caractérisé par le fait que des indicateurs de positions sont affectés aux éléments d'entraînement destinés aux mouvements des parties du manipulateur, lesquels indicateurs sont reliés à des appareils enregistreurs du

déroulement des mouvements.

Fig,1

Fig.2

Position 1

Position 2

Position 3

Fig.3

Fig. 4

0 066 791